# EUROPEAN PATENT SPECIFICATION

(11) **EP 1 834 119 B1**
(45) Date of publication and mention of the grant of the patent: **08.04.2009**
(21) Application number: 05701421.9
(22) Date of filing: 03.01.2005
(51) Int. Cl.: F16K 41/10

(54) **STOPCOCK CLOSURE PLUG**
ABSPERRHAHNVERSCHLUSSSTOPFEN
BOUCHON POUR ROBINET D'ARRET

(43) Date of publication of application: 19.09.2007
(73) Proprietor: Indigne, Mark, 2830 Willebroek (BE)
(72) Inventor: Indigne, Mark, 2830 Willebroek (BE)
(74) Representative: Leherte, Georges M.L.M.
(86) International application number: PCT/EP2005/050005
(87) International publication number: WO 2006/072468

(56) References cited:
- EP-A- 1 462 695
- US-A- 5 386 849
- US-A1- 2001 032 954

## Description

The invention relates to stopcock closure plugs, more particularly to stopcock closure plugs with a closure membrane of synthetic material.

In the field of handling food and beverages, in particular drinking water, very stringent criteria are being applied to the materials that come into contact therewith.
Whereas appropriate materials for the pipes and conducts for handling such type of products are now commonly available, there remained serious difficulties in finding appropriate stopcocks meeting the stringent criteria referred to.
Recently a new stopcock technology was proposed in EP 1 462 695, comprising a housing with inlet and outlet accesses and a housing cover entirely made of synthetic / plastic material.
This new stopcock technology however still involves problems in respect of the material for the closure membrane. No proper material could be found that satisfies at the same time a proper adherence (grip) of the closure membrane to the spindle nut of the closure plug and extremely low levels of extractable elements as desirable for food and drinking water applications.
A compromise had to be settled on low toxicity synthetic rubbers which involve an in situ vulcanization / curing on the spindle nut for ensuring proper grip.

Furthermore from US2001/032954 a stopcock with a closure membrane made from silicone or another suitable elastomeric or resilient material is known, This document is considered to be the closest prior art and corresponds to the preambles of claim 1 and claim 10.

It is an objective of this invention to overcome the drawbacks of state of the art stopcocks by providing a stopcock in which all materials in contact with the liquid (drinking water) can consist of materials that satisfy very stringent health and safety criteria, and in particular all approvals for use in direct contact with food, medical approvals and approvals for water in accordance with EC rules, US FDA approval, medical USP class VI compliance and water-WRC criteria.

The invention therefor provides a stopcock, in particular a stopcock comprising a housing with an inlet and an outlet access and a closure plug in the housing, and with a spindle nut (being the driving spindle for the closure plug) and a closure membrane adhering thereto, controlling the passage between the inlet and outlet, wherein the stopcock closure plug membrane is made of thermoplastic elastomer (TPE).

The expression "thermoplastic elastomer' or TPE as used in the present specification does not refer to a specific class of chemical compounds but rather to a class of materials having a specific property profile, namely any polymeric material which is processable as a typical thermoplastic material (in terms of injection molding, extrusion or blow molding processability, and in terms of recyclability) but has mechanical properties comparable to rubbers (in terms of flexibility -i.e. low stiffness- and elasticity -i.e. compression set and tension set-).

According to a preferred feature of the invention the TPE used for the stopcock closure plug membrane is suitably a polyester-polyether type TPE or a polyester-polyester type TPE.

Particularly appropriate TPE types are for instance the products commercialized by the company DSM under the references "ARNITEL E", "ARNITEL P" and "ARNITEL U".

The stopcock closure plug membranes according to the invention are particularly suitable for use in stopcocks "essentially made of synthetic / plastic material", such as stopcocks comprising a housing cover and a housing with its inlet and outlet accesses entirely made of synthetic / plastic material, as described in EP 1 462 695, the disclosure of which is hereby incorporated in this specification.

Particularly suitable stopcocks in this context, comprise, for instance, a housing and housing cover made of a, optionally fiber reinforced, material selected from polypropylene, polyphenylene ether and polyamide, optionally reinforced with fibers (glass fibers or other engineering fibers), and/or a housing with its inlet and outlet accesses consisting of a molded plastic piece comprising a longitudinal duct with longitudinal reinforcing ribs, and a plug cavity provided with its axis perpendicular to said longitudinal duct, with reinforcing ribs of said plug cavity extending parallel to its axis and with at least three peripheral reinforcement zones for fixing the housing cover to the housing, and a housing cover consisting of a molded plastic piece comprising a cover surface with radial reinforcement ribs and/or one or more peripheral rib(s), perpendicular to the plane of said cover surface, with at least three peripheral reinforcement zones for fixing the housing cover to the housing, and a hollow protrusion, along the axis of said plug cavity, for holding said driving spindle for the closure plug, provided with radial reinforcement ribs.

The invention also specifically relates to closure plugs for controlling the passage between the inlet and outlet of a stopcock for fluids, comprising a spindle nut and a closure membrane adhering thereto, wherein said closure membrane is made of thermoplastic elastomer (TPE), in particular a polyester-polyether type TPE or a polyester-polyester type TPE.
According to a preferred feature of the invention the spindle nut of such closure plug comprises means for ensuring proper adherence / grip of the TPE closure membrane to the closure plug spindle nut, such as bores and/or grooves into which penetrates the TPE material of the closure membrane, or grooves and/or protrusions cooperating with adapted / corresponding ribs and/or grooves on the inside of the closure membrane, to allow a forced "one-way" introduction/setting of the spindle nut in the closure membrane.

Whereas with conventional rubbers no real problems are encountered in respect to the adherence or grip of the membrane to the spindle nut, due to the in situ curing (vulcanization / cross-linking / polymerization) of the rubber compound on the spindle nut, for the stopcocks and the closure plugs according to the invention, a limited adherence occurs with the thermoplastic elastomer.
According to a further preferred feature of the invention the spindle nut of the closure plug can therefore most suitably comprise means for ensuring proper adherence / grip of the TPE closure membrane to the closure plug spindle nut.

In a first preferred embodiment of the invention, such means may be linked to the fact that the spindle nut comprises bores and/or grooves into which penetrates the TPE material of the closure membrane.
This penetration of the TPE material into the bores and/or grooves of the spindle nut may for instance result from injecting molten TPE on the spindle nut in a mould for shaping the plug membrane.

In another preferred embodiment of the invention, the means means for ensuring proper adherence / grip of the TPE closure membrane to the closure plug spindle nut may reside in the fact that the spindle nut comprises grooves and/or protrusions cooperating with adapted / corresponding ribs and/or grooves on the inside of the closure membrane, to allow a forced "one-way" introduction/setting of the spindle nut in the closure membrane.

Further features and details of the invention will become apparent from the following description of two specific embodiments of the invention, given by way of mere illustrative examples, having reference to the attached drawings.

In those drawings :
Figure 1 represents a view, in perspective, of a stopcock closure plug in accordance with the invention ;
Figure 2 represents the stopcock closure plug of figure 1, in an exploded view of a plastic stopcock according to EP 1 462 695 ;
Figure 3 represents a view, in perspective, of a first embodiment of a spindle nut for a stopcock closure plug with a TPE closure membrane according to the invention ;
Figure 4 represents a section view of the spindle nut according of figure 3 ;
Figure 5 represents a view, in perspective, of another embodiment of a spindle nut for a stopcock closure plug with a TPE closure membrane according to the invention ;
Figure 6 represents a section view of the spindle nut according of figure 5 ;

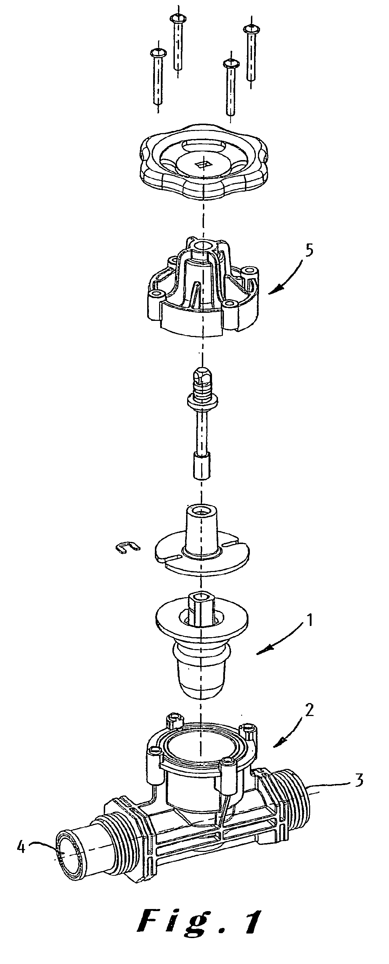

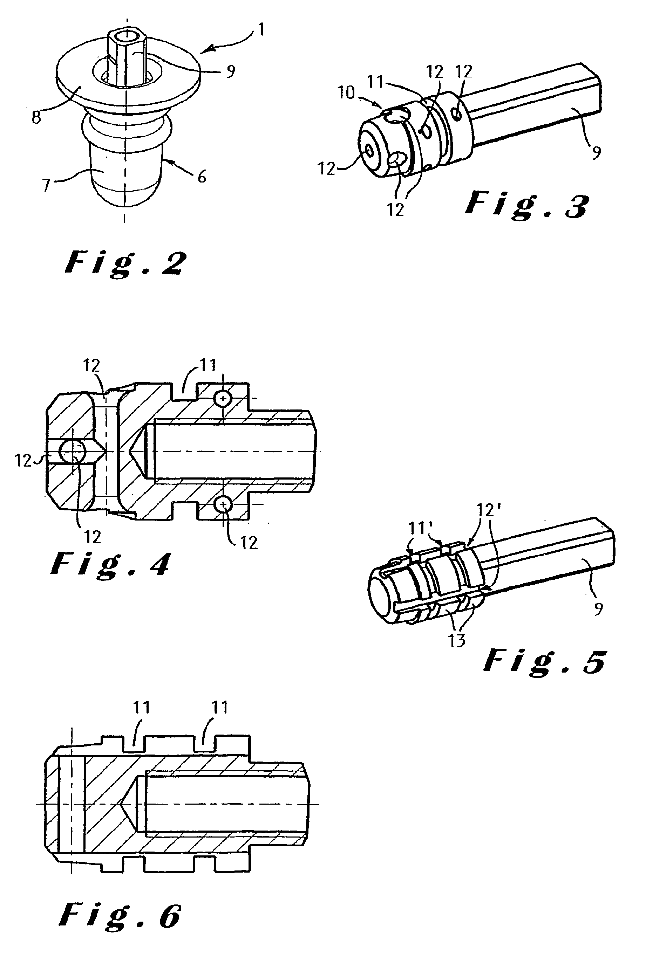

The stopcock shown in figure 1 comprises
a housing (2) with its outlet access (3) and its inlet access (4) and a housing cover (5)
(both consisting of moulded (and/or tooled) plastic pieces),
and a stopcock closure plug (1) as further detailed in figure 2 and here below.

The stopcock closure plug (1) comprises an "elastic" closure membrane (6) - with a plug part (7) adapted to control the fluid passage of the stopcock and a flange part (8) adapted to be clamped (together with an intermediate bush) between the housing (2) and housing cover (3) - adequately fitted to a spindle nut (9).
In accordance with the invention, the "elastic" closure membrane is made of a thermoplastic elastomer (TPE), as specifically defined in this specification.

According to the embodiment of the invention shown in figures 3 and 4, the means for ensuring adequate fitting (adherence/grip) of the TPE material to the spindle nut (9) involves a spindle nut head part (10) with a circumferential groove (11) and with several transverse bores or channels (12).

When injecting the molten thermoplastic elastomer on the spindle nut head part (10) - in an appropriate mould - the molten TPE penetrates into the groove (11) and bores (12), thus providing proper adherence / grip of the plug membrane to the spindle nut head.

According to the embodiment of the invention shown in figures 5 and 6, the means for ensuring adequate fitting (adherence/grip) of the TPE material to the spindle nut (9') involves a spindle nut head part (10') with circumferential grooves (11') and longitudinal grooves (12'), and corresponding ribs / protrusions (13).

When injecting the molten thermoplastic elastomer on the spindle nut head part (10') - in an appropriate mould - the molten TPE penetrates into the grooves (11') and (12'), thus providing proper adherence / grip of the plug membrane to the spindle nut head.

Alternatively the spindle nut according to figures 5 and 6 may also be introduced / set, in a forced way, into a pre-formed thermoplastic elastomer membrane, provided with adapted/corresponding grooves and ribs/protrusions, so that once the spindle nut has been forced into place, there is adequate fitting (adherence/grip) of the TPE membrane to the spindle nut head.

The invention has thus been explained in detail having reference to particular embodiments. It should however be observed that the details of these embodiment do not involve any limitation of the scope of the invention as disclosed in the above text and as expressed in the claims here below and that many variations within the scope of these claims will be readily apparent to the skilled art person.

## Claims

1. Stopcock assembly for controlling the passage of fluids, comprising a housing (2) with an inlet (3) and an outlet (4) access and a closure plug (1) in the housing, with a spindle nut (9) and a closure membrane (6) adhering thereto, controlling the passage between the inlet (3) and outlet (4), **characterized in that** said closure membrane (6) is made of thermoplastic elastomer (TPE).

2. Stopcock assembly according to claim 1, **characterized in that** the TPE is a polyester-polyether type TPE or a polyester-polyester type TPE.

3. Stopcock assembly according to any one of claims 1 and 2, **characterized in that** the stopcock comprises a housing cover (5) and the housing (2) with its inlet (3) and outlet (4) accesses made of synthetic / plastic material.

4. Stopcock assembly according to claim 3, **characterized in that** the housing (2) and housing cover (5) are made of a, optionally fiber reinforced, material selected from polypropylene, polyphenylene ether and polyamide.

5. Stopcock assembly according to any one of the preceding claims, **characterized in that** the spindle nut (9) of the closure plug (1) comprises means for ensuring proper adherence / grip of the TPE closure membrane to the closure plug spindle nut.

6. Stopcock assembly according to claim 5, **characterized in that** the spindle nut comprises bores (12) and/or grooves (11) into which penetrates the TPE material of the closure membrane.

7. Stopcock assembly according to claim 6, **characterized in that** the TPE material has penetrated into the bores (12) and/or grooves (11) of the spindle nut as a result of injecting molten TPE on the spindle nut in a mould for shaping the plug membrane.

8. Stopcock assembly according to claim 5, **characterized in that** the spindle nut comprises grooves (11) and/or protrusions (13) cooperating with adapted / corresponding ribs and/or grooves on the inside of the closure membrane, to allow a forced "one-way" introduction/setting of the spindle nut in the closure membrane.

9. Stopcock assembly according to any one of claim 3 - 8, **characterized in that** the housing with its inlet and outlet accesses consists of a molded plastic piece comprising a longitudinal duct with longitudinal reinforcing ribs, and a plug cavity provided with its axis perpendicular to said longitudinal duct, with reinforcing ribs of said plug cavity extending parallel to its axis and with at least three peripheral reinforcement zones for fixing the housing cover to the housing, and the housing cover consists of a molded plastic piece comprising a cover surface with radial reinforcement ribs and/or one or more peripheral rib(s), perpendicular to the plane of said cover surface, with at least three peripheral reinforcement zones for fixing the housing cover to the housing, and a hollow protrusion, along the axis of said plug cavity, for holding said driving spindle for the closure plug, provided with radial reinforcement ribs.

10. Closure plug component (1) for a stopcock assembly for controlling the passage of fluids, between the inlet (3) and outlet (4) of said stopcock assembly, comprising a spindle nut and a closure membrane (6) adhering thereto, **characterized in that** said closure membrane (6) is made of thermoplastic elastomer (TPE).

11. Closure plug component according to claim 10,
**characterized in that** the TPE is a polyester-polyether type TPE or a polyester-polyester type TPE.

12. Closure plug component according to any one of claims 9 and 10, **characterized in that** the spindle nut of the closure plug comprises means for ensuring proper adherence / grip of the TPE closure membrane to the closure plug spindle nut.

13. Closure plug component according to claim 12,
**characterized in that** the spindle nut comprises bores and/or grooves into which penetrates the TPE material of the closure membrane.

14. Closure plug component according to claim 13,
**characterized in that** the TPE material has penetrated into the bores and/or grooves of the spindle nut as a result of injecting molten TPE on the spindle nut in a mould for shaping the plug membrane.

15. Closure plug component according to claim 12,
**characterized in that** the spindle nut comprises grooves and/or protrusions cooperating with adapted / corresponding ribs and/or grooves on the inside of the closure membrane, to allow a forced "one-way" introduction/setting of the spindle nut in the closure membrane.

## Patentansprüche

1. Sperrhahnanordnung zum Steuern des Durchlasses von Flüssigkeiten, umfassend ein Gehäuse (2) mit einem Einlass (3) und einem Auslass (4) und einem Verschlussstopfen (1) in dem Gehäuse, mit einer Spindelmutter (9) und einer daran befestigte Verschlussmembran (6), die den Durchlass zwischen dem Einlass (3) und dem Auslass (4) steuern, **dadurch gekennzeichnet, dass** die Verschlussmembran (6) aus Thermoplastelastomer (TPE) gefertigt ist.

2. Sperrhandanordnung nach Anspruch 1, **dadurch gekennzeichnet, dass** das TPE ein TPE der Polyester-Polyether-Art oder ein TPE der Polyester-Polyester-Art ist.

3. Sperrhahnanordnung nach einem der Ansprüche 1 und 2, **dadurch gekennzeichnet, dass** der Sperrhahn eine Gehäuseabdeckung (5) umfasst und das Gehäuse (2) mit seinem Einlass (3) und seinem Auslass (4) aus synthetischem Material / Kunststoffmaterial gefertigt ist.

4. Sperrhahnanordnung nach Anspruch 3, **dadurch gekennzeichnet, dass** das Gehäuse (2) und die Gehäuseabdeckung (5) aus einem wahlweise faserverstärkten Material gefertigt sind, das ausgewählt ist aus Polypropylen, Polyphenylenehter und Polyamid.

5. Sperrhahnanordnung nach einem der vorhergehenden Ansprüche, **dadurch gekennzeichnet, dass** die Spindelmutter (9) des Verschlussstopfens (1) Mittel zum Gewährleisten einer angemessenen Haftung / Griffs der TPE-Verschlussmembran an der Spindelmutter des Verschlussstopfens umfasst.

6. Sperrhahnanordnung nach Anspruch 5, **dadurch gekennzeichnet, dass** die Spindelmutter Bohröffnungen (12) und/oder Rillen (11) umfasst, in die das TPE-Material der Verschlussmembran eindringt.

7. Sperrhahnanordnung nach Anspruch 6, **dadurch gekennzeichnet, dass** das TPE-Material in die Bohröffnungen (12) und/oder Rillen (11) der Spindelmutter infolge des Injizierens von geschmolzenem TPE auf die Spindelmutter in eine Gussform zum Formen der Stopfenmembran eingedrungen ist.

8. Sperrhahnanordnung nach Anspruch 5, **dadurch gekennzeichnet, dass** die Spindelmutter Rillen (11) und/oder Vorsprünge (13) umfasst, die mit angepassten / zugehörigen Rippen und/oder Rillen auf der Innenseite der Verschlussmembran zusammenwirken, um eine "Einweg"-Einführung/Einsetzung der Spindelmutter in die Verschlussmembran unter Druck zu ermöglichen.

9. Sperrhahnanordnung nach einem der Ansprüche 3 bis 8, **dadurch gekennzeichnet, dass** das Gehäuse mit seinem Einlass und seinem Auslass aus einem geformten Kunststoffstück, das eine längs verlaufende Leitung mit längs verlaufenden Verstärkungsrippen umfasst, und einem Stopfenhohlraum besteht, der mit seiner Achse senkrecht zu der längs verlaufenden Leitung angeordnet ist, wobei die Verstärkungsrippen des Stopfenhohlraums parallel zu ihrer Achse verlaufen und mindestens periphere Verstärkungsbereiche vorgesehen sind, um die Gehäuseabdeckung an dem Gehäuse zu befestigen, wobei die Gehäuseabdeckung aus einem geformten Kunststoffstück besteht, das eine Abdeckoberfläche mit radialen Verstärkungsrippen und/oder eine oder mehrere periphere Rippe oder Rippen umfasst, die zu der Ebene der Abdeckoberfläche senkrecht sind, mit mindestens drei peripheren Verstärkungsbereichen zum Befestigen der Gehäuseabdeckung an dem Gehäuse und einem hohlen Vorsprung entlang der Achse des Stopfenhohlraums zum Halten der Antriebsspindel für den Verschlussstopfen, der mit radialen Verstärkungsrippen versehen ist.

10. Verschlussstopfenkomponente (1) für eine Sperrhahnanordnung zum Steuern des Durchlasses von Flüssigkeiten zwischen dem Einlass (3) und dem Auslass (4) der Sperrhahnanordnung, umfassend eine Spindelmutter und eine daran befestigte Verschlussmembran (6), **dadurch gekennzeichnet, dass** die Verschlussmembran (6) aus Thermoplastelastomer (TPE) gefertigt ist.

11. Verschlussstopfenkomponente nach Anspruch 10, **dadurch gekennzeichnet, dass** das TPE ein TPE der Polyester-Polyether-Art oder ein TPE der Polyester-Polyester-Art ist.

12. Verschlussstopfenkomponente nach einem der Ansprüche 9 und 10, **dadurch gekennzeichnet, dass** die Spindelmutter des Verschlussstopfens Mittel zum Gewährleisten einer angemessenen Haftung / Griffs der TPE-Verschlussmembran an der Spindelmutter des Verschlussstopfens umfasst.

13. Verschlussstopfenkomponente nach Anspruch 12, **dadurch gekennzeichnet, dass** die Spindelmutter Bohröffnungen und/oder Rillen umfasst, in die das TPE-Material der Verschlussmembran eindringt.

14. Verschlussstopfenkomponente nach Anspruch 13, **dadurch gekennzeichnet, dass** das TPE-Material in die Bohröffnungen und/oder Rillen der Spindelmutter infolge des Injizierens von geschmolzenem TPE auf die Spindelmutter in eine Form zum Formen der Stopfenmembran eingedrungen ist.

15. Verschlussstopfenkomponente nach Anspruch 12, **dadurch gekennzeichnet, dass** die Spindelmutter Rillen und/oder Vorsprünge umfasst, die mit angepassten / zugehörigen Rippen und/oder Rillen auf der Innenseite der Verschlussmembran zusammenwirken, um eine "Einweg"-Einführung/Einsetzung der Spindelmutter in die Verschlussmembran unter Druck zu ermöglichen.

## Revendications

1. Ensemble de robinet d'arrêt pour contrôler le passage de fluides, comprenant un logement (2) avec un accès d'entrée (3) et de sortie (4) et un bouchon de fermeture (1) dans le logement, avec un écrou à broche (9) et une membrane de fermeture (6) y adhérant, contrôlant le passage entre l'entrée (3) et la sortie (4), **caractérisé en ce que** ladite membrane de fermeture (6) est réalisée en élastomère thermoplastique (TPE).

2. Ensemble de robinet d'arrêt selon la revendication 1, **caractérisé en ce que** le TPE est un TPE de type polyester - polyéther ou un TPE de type polyester - polyester.

3. Ensemble de robinet d'arrêt selon l'une quelconque des revendications 1 et 2, **caractérisé en ce que** le robinet d'arrêt comprend un couvercle (5) de logement et le logement (2) avec ses accès d'entrée (3) et de sortie (4) réalisés en matière plastique / synthétique.

4. Ensemble de robinet d'arrêt selon la revendication 3, **caractérisé en ce que** le logement (2) et le couvercle (5) de logement sont réalisés dans une matière, facultativement renforcée par des fibres, choisie parmi le polypropylène, l'éther de polyphénylène et le polyamide.

5. Ensemble de robinet d'arrêt selon l'une quelconque des revendications précédentes, **caractérisé en ce que** l'écrou à broche (9) du bouchon de fermeture (1) comprend des moyens pour assurer une adhérence / forte tenue adéquate de la membrane de fermeture en TPE à l'écrou à broche du bouchon de fermeture.

6. Ensemble de robinet d'arrêt selon la revendication 5, **caractérisé en ce que** l'écrou à broche comprend des orifices (12) et / ou des rainures (11) dans lesquels pénètre la matière TPE de la membrane de fermeture.

7. Ensemble de robinet d'arrêt selon la revendication 6,
**caractérisé en ce que** la matière TPE a pénétré dans les orifices (12) et / ou les rainures (11) de l'écrou à broche du fait de l'injection de TPE fondu sur l'écrou à broche dans un moule pour former la membrane de bouchon.

8. Ensemble de robinet d'arrêt selon la revendication 5, **caractérisé en ce que** l'écrou à broche comprend des rainures (11) et / ou des protubérances (13) coopérant avec des nervures et / ou des rainures adaptées / correspondantes sur l'intérieur de la membrane de fermeture, pour permettre l'introduction / la mise en place "unidirectionnelle" forcée de l'écrou à broche dans la membrane de fermeture.

9. Ensemble de robinet d'arrêt selon l'une quelconque des revendications 3 - 8, **caractérisé en ce que** le logement avec ses accès d'entrée et de sortie consiste en une pièce en plastique moulée comprenant un conduit longitudinal avec des nervures de renforcement longitudinales, et une cavité pour bouchon prévue avec son axe perpendiculaire audit conduit longitudinal, avec des nervures de renforcement de ladite cavité pour bouchon s'étendant parallèlement à son axe et avec au moins trois zones de renforcement périphériques pour fixer le couvercle de logement au logement, et le couvercle de logement consiste en une pièce en plastique moulée comprenant une surface de couvercle avec des nervures de renforcement radiales et / ou une ou plusieurs nervure(s) périphérique(s), perpendiculaires audit plan de ladite surface de couvercle, avec au moins trois zones de renforcement périphériques pour fixer le couvercle de logement au logement, et une protubérance creuse, le long de l'axe de ladite cavité pour bouchon, pour retenir ladite broche d'entraînement, pourvue de nervures de renforcement radiales.

10. Composant formant bouchon de fermeture (1) pour un ensemble de robinet d'arrêt pour contrôler le passage de fluides, entre l'entrée (3) et la sortie (4) dudit ensemble de robinet d'arrêt, comprenant un écrou à broche et une membrane de fermeture (6) y adhérant, **caractérisé en ce que** ladite membrane de fermeture (6) est réalisée en élastomère thermoplastique (TPE).

11. Composant formant bouchon de fermeture selon la revendication 10, **caractérisé en ce que** le TPE est un TPE de type polyester - polyéther ou un TPE de type polyester - polyester.

12. Composant formant bouchon de fermeture selon l'une quelconque des revendications 9 et 10, **caractérisé en ce que** l'écrou à broche du bouchon de fermeture comprend des moyens pour assurer une adhérence / forte tenue adéquate de la membrane de fermeture en TPE à l'écrou à broche du bouchon de fermeture.

13. Composant formant bouchon de fermeture selon la revendication 12, **caractérisé en ce que** l'écrou à broche comprend des orifices et / ou des rainures dans lesquels pénètre la matière TPE de la membrane de fermeture.

14. Composant formant bouchon de fermeture selon la revendication 13, **caractérisé en ce que** la matière TPE a pénétré dans les orifices et / ou les rainures de l'écrou à broche du fait de l'injection de TPE fondu sur l'écrou à broche dans un moule pour former la membrane de bouchon.

15. Composant formant bouchon de fermeture selon la revendication 12, **caractérisé en ce que** l'écrou à broche comprend des rainures et / ou des protubérances coopérant avec des nervures et / ou des rainures adaptées / correspondantes sur l'intérieur de la membrane de fermeture, pour permettre l'introduction / la mise en place "unidirectionnelle" forcée de l'écrou à broche dans la membrane de fermeture.
